# EUROPÄISCHE PATENTSCHRIFT

(11) **EP 2 018 488 B1**
(45) Veröffentlichungstag und Bekanntmachung des Hinweises auf die Patenterteilung: **28.07.2010**
(21) Anmeldenummer: 07728472.7
(22) Anmeldetag: 25.04.2007
(51) Int. Cl.: F16D 25/08, F16D 25/12

(54) **AUSRÜCKSYSTEM MIT KONSTANTEM HUB DURCH VERSCHLEIßAUSGLEICH**
RELEASING SYSTEM WITH CONSISTENT STROKE UTILIZING WEAR AND TEAR COMPENSATION
SYSTEME DE DEBRAYAGE AVEC COURSE CONSTANTE PAR COMPENSATION DE L'USURE

(30) Priorität: 13.05.2006 DE 102006022461
(43) Veröffentlichungstag der Anmeldung: 28.01.2009
(73) Patentinhaber: ZF Friedrichshafen AG, 88038 Friedrichshafen (DE)
(72) Erfinder: BADER, Josef, 88045 Friedrichshafen (DE); GRAF, Andreas, 78333 Stockach - Wahlwies (DE); HEINZELMANN, Karl-Fritz, 88074 Meckenbeuren (DE)
(86) Internationale Anmeldenummer: PCT/EP2007/054016
(87) Internationale Veröffentlichungsnummer: WO 2007/131863

(56) Entgegenhaltungen:
- EP-A1- 0 310 733
- WO-A-2006/007086
- DE-A1- 4 136 583
- DE-A1- 4 407 665
- DE-A1- 10 210 200

## Beschreibung

Die Erfindung betrifft ein Ausrücksystem zur Ansteuerung einer Schalt- und/oder Anfahrkupplung in einem Kraftfahrzeug nach der im Oberbegriff von Anspruch 1 näher definierten Art.

Eine Schalt- und/oder Anfahrkupplung, welche beispielsweise als Reibungskupplung ausgebildet ist, ist ein stark beanspruchtes Element in einem Antriebstrang eines Kraftfahrzeuges. Obwohl sich Qualität und Lebensdauer von Kupplungsbelägen wesentlich erhöht haben, unterliegen sie selbst bei schonender Behandlung betriebsbedingtem Verschleiß. Eine Abnahme der Belagstärke im Kupplungssystem beeinflusst die Position einer Kupplungsfeder, beispielsweise einer Membran- oder Tellerfeder, wodurch eine Ausrück- bzw. Anpresskraft und damit auch eine notwendige Pedalkraft steigen. Im Stand der Technik sind Reibungskupplungen und Ausrücksysteme beschrieben, welche einen Belagverschleiß an einer Kupplung automatisch ausgleichen.

In der DE 44 07 6S5 B4 ist ein hydraulisch betätigbares Ausrücksystem für eine Kraftfahrzeug-Reibungskupplung offenbart. Das Ausrücksystem besteht aus einer konzentrisch zu einer Getriebeeingangswelle angeordneten Kolben-Zylinder-Einheit, deren Zylinder am Getriebegehäuse befestigt ist. Im Zylinder ist ein Kolben angeordnet, dessen Mantelfläche zumindest teilweise von einem Führungselement umgriffen ist. Eine am Ausrücksystem angeordnete Vorlastfeder dient dazu, ein Ausrücklager des Ausrücksystems mit einer Anpressfeder der Reibungskupplung in Kontakt zu halten. Durch ein Rückhaltemittel für das Führungselement wird erreicht, dass das Führungselement beim Ein- und Ausfahren des Kolbens als ortsfestes Bauteil wirksam ist. Das Führungselement wird erst zu einer Axialbewegung gezwungen, wenn bei einem Verschleiß an den Reibbelägen der Reibungskupplung der Kolben durch die Anpressfeder der Reibungskupplung tiefer in die Zylinderkammer hinein geschoben wird. Dabei wird die Wirkung des Rückhaltemittels aufgehoben und das Führungselement um eine axiale Wegstrecke verschoben, bis die verscheißbedingte Lageänderung der Anpressfeder der Reibungskupplung kompensiert ist. Sobald sich ein neues Kräftegleichgewicht eingestellt hat, kommt das Führungselement zum Stillstand. Ausgehend von dieser neuen Position des Führungselementes führt der Kolben seine Ein- und Ausfahrbewegung mit dem gewohnten Kolbenhub aus, wobei sein Hubweg gegenüber dem Hubweg bei neuwertiger Kupplung in Axialrichtung verlagert ist.

Der vorliegenden Erfindung liegt die Aufgabe zugrunde, ein Ausrücksystem zur Ansteuerung einer Schalt- und/oder Anfahrkupplung in einem Kraftfahrzeug darzustellen, durch welches ein Kupplungsverschleiß sicher und einfach kompensiert werden kann und welches mit geringem fertigungstechnischem Aufwand herstellbar ist.

Die der Erfindung zugrunde liegende Aufgabe wird durch ein, auch die kennzeichnenden Merkmale des Hauptanspruchs aufweisendes, gattungsgemäßes Ausrücksystem gelöst.

Das erfindungsgemäße Ausrücksystem für eine Schalt- und/oder Anfahrkupplung in einem Kraftfahrzeug, besteht aus einer konzentrisch zu einer Getriebeeingangswelle angeordneten Kolben-Zylinder-Einheit. Die Schalt- und/oder Anfahrkupplung ist als Reibungskupplung ausgebildet, welche über ihre Lebensdauer einen Verschleiß aufweisen kann. Die Kolben-Zylinder-Einheit weist einen Zylinder sowie zwei Kolben auf, durch welche zwei Druckräume im Zylinder begrenzt werden. Der Zylinder kann beispielsweise an einem Getriebegehäuse angeordnet sein. Der erste Kolben der Kolben-Zylinder-Einheit dient als Arbeitskolben, wobei der zweite Kolben der Kolben-Zylinder-Einheit eine Endlage des Ausrücksystems darstellt. Durch die Ein- und Ausfahrbewegung des Arbeitskolbens wird die Reibungskupplung betätigt. Die beiden Druckräume der Kolben-Zylinder-Einheit können separat mit einem Druckmedium angesteuert werden. Vorzugsweise wird der erste Druckraum der Kolben-Zylinder-Einheit, welcher durch die beiden Kolben der Kolben-Zylinder-Einheit begrenzt wird, pneumatisch angesteuert, während der zweite Druckraum der Kolben-Zylinder-Einheit hydraulisch angesteuert wird. Der zweite Druckraum, welcher mit einem hydraulischen Druckmedium befüllt ist, wird durch ein Rückschlagventil in einer Druckmittelleitung und durch ein Schaltventil in einer Rückflussleitung verschlossen, sobald das Ausrücksystem den ersten Druckraum mit einem entsprechenden Betätigungsdruck befüllt. Während der Ruhephase der Kupplung wird im zweiten Druckraum der Kolben-Zylinder-Einheit durch ein Überströmventil in der hydraulischen Rückflussleitung ein bestimmter Druck gehalten, der eine Ruhekraft erzeugt, welche einer Ruhekraft einer Vorlastfeder entspricht. Somit wird sichergestellt, dass ein Ausrücklager des Ausrücksystems immer an den Anpressfedern der Kupplung anliegt, wodurch auf eine Vorlastfeder verzichtet werden kann. Tritt zwischen einer Anpressplatte und den Reibbelägen der Reibungskupplung ein Verschleiß auf, so entsteht eine Kraft auf das Ausrücklager und somit eine Axialkraft auf die Kolben-Zylinder-Einheit. Durch diese Axialkraft werden die beiden Kolben der Kolben-Zylinder-Einheit in Richtung zum getriebeseitigen Ende des Zylinders verschoben, bis die verschleißbedingte Lageänderung der Anpressfeder der Reibungskupplung kompensiert ist. Sobald sich ein neues Kräftegleichgewicht eingestellt hat, kommen die beiden Kolben zum Stillstand. Durch den Verschleißausgleich verschiebt sich die Endlageposition des zweiten Kolbens der Kolben-Zylinder-Einheit ebenfalls in Richtung zum getriebeseitigen Ende des Zylinders, wodurch es zu einer axialen Verschiebung des Kolbenhubs bei einer Kupplungsausrückung kommt. Ausgehend von dieser neuen Position der beiden Kolben führt der Arbeitskolben seine Ein- und Ausfahrbewegung mit dem gewohnten Kolbenhub aus, da der erste Druckraum der Kolben-Zylinder-Einheit über eine Druckerzeugungsvorrichtung immer mit einem konstanten Druck beaufschlagt wird. Bei weitergehendem Betrieb des Ausrücksystems werden die Kolben durch einen immer größer werdenden Verschleiß an der Reibungskupplung zunehmend mehr in Richtung zum getriebeseitigen Ende des Zylinders verlagert. Bei einem maximalen Kupptungsverschteiß erreicht der zweite Kolben der Kolben-Zylinder-Einheit eine Endstellung am getriebeseitigen Ende des Zylinders. Auch in dieser Stellung führt der Arbeitskolben den gewohnten Kolbenhub aus.

Im Folgenden wird das Grundprinzip der Erfindung, welche mehrere Ausführungsformen zulässt, an Hand einer Zeichnung beispielhaft näher erläutert.

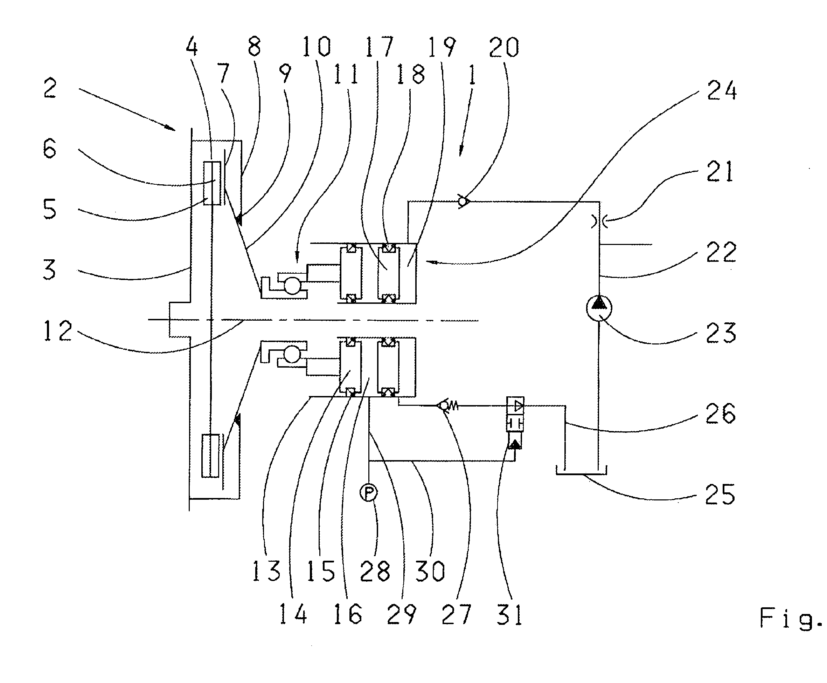

Die einzige Figur dieser Zeichnung zeigt ein Ausrücksystem zur Ansteuerung einer Reibungskupplung in einem Kraftfahrzeug.

Das in der Fig. dargestellte Ausrücksystem 1 für eine Reibungskupplung 2 in einem Kraftfahrzeug besteht aus einer konzentrisch zu einer Getriebeeingangswelle 12 angeordneten Kolben-Zylinder-Einheit 24. Die Reibungskupplung 2 besteht beispielsweise aus einem Schwungrad 3, einem Kupplungsgehäuse 8, einer Kupplungsscheibe 4, welche Reibbeläge 5, 6 aufweist und einer Anpressfeder 10, welche über Distanzbolzen 9 mit einer Anpressplatte 7 verbunden ist. Die Anpressfeder 10 kann beispielsweise als Membran- oder Tellerfeder ausgebildet sein und steht mit einem Ausrücklager 11 des Ausrücksystems 1 in Verbindung. Für eine genauer Beschreibung einer Reibungskupplung 2 wird auf die Offenlegungsschriften DE 32 41 248 A1 und DE 197 03 333 B4 verwiesen. Die Kolben-Zylinder-Einheit 24 weist einen Zylinder 13 sowie einen ersten Kolben 14 und einen zweiten Kolben 17 auf, durch welche ein erster Druckraum 16 und ein zweiter Druckraum 19 der Kolben-Zylinder-Einheit 24 begrenzt werden. Der erste Kolben 14 der Kolben-Zylinder-Einheit 24 dient als Arbeitskolben, wobei der zweite Kolben 17 der Kolben-Zylinder-Einheit 24 eine Endlage des Ausrücksystems 1 darstellt. Des Weiteren weist das Ausrücksystem 1 einen Hydraulikkreislauf auf, bestehend aus einer Druckerzeugungsvorrichtung 23, einem Druckregulierungsmittel 21, einem Rückschlagventil 20, einem Überströmventil 27, einem Schaltventil 31, einer Druckmittelleitung 22 sowie einer Rückflussleitung 26 und einem als Druckmittelsenke 25 dienenden Behälter. Als Druckerzeugungsvorrichtung 23 und Druckmittelsenke 25 können dabei vorzugsweise die in einem Getriebe bereits vorhandenen Einrichtungen zur Schmiermittelversorgung des Getriebes verwendet werden. Die Druckmittelleitung 22 und die Rückflussleitung 26 sind mit dem zweiten Druckraum 19 der Kolben-Zylinder-Einheit 24 verbunden, während der erste Druckraum 16 der Kolben-Zylinder-Einheit 24 mit einer weiteren Druckmittelleitung 29 verbunden ist. Die Druckmittelleitung 29 ist mit einer pneumatischen Druckerzeugungsvorrichtung 28 verbunden, beispielsweise mit einer Pneumatikpumpe. Das Schaltventil 31 im Hydraulikkreislauf ist mit einer weiteren Druckmittelleitung 30 verbunden, welche mit der pneumatischen Druckerzeugungsvorrichtung 28 in Verbindung steht. Der erste Druckraum 16 der Kolben-Zylinder-Einheit 24 ist somit pneumatisch ansteuerbar während der zweite Druckraum 19 der Kolben-Zylinder-Einheit 24 hydraulisch angesteuert wird. Zwischen dem Zylinder 13 und dem ersten Kolben 14 der Kolben-Zylinder-Einheit 24 kann mindestens ein Dichtmittel 15 angeordnet sein. Ebenso kann zwischen dem Zylinder 13 und dem zweiten Kolben 17 der Kolben-Zylinder-Einheit 24 mindestens ein Dichtmittel 18 angeordnet sein. Für eine Kupplungsbetätigung wird der erste Druckraum 16 der Kolben-Zylinder-Einheit 24 über die pneumatische Druckerzeugungsvorrichtung 28 mit einem entsprechenden Betätigungsdruck befüllt. Der zweite Druckraum 19 der Kolben-Zylinder-Einheit 24, welcher mit einem hydraulischen Druckmedium befüllt ist, wird während der Kupplungsbetätigung durch ein Rückschlagventil 20, welches in der Druckmittelleitung 22 angeordnet ist, und durch ein in der Rückflussleitung 26 angeordnetes Schaltventil 31 verschlossen. Über den pneumatischen Betätigungsdruck, welcher die Kupplungsausrückung steuert, wird das Schaltventil 31 in der hydraulischen Rückflussleitung 26 angesteuert, wodurch die Rückflussleitung 26 zwischen dem zweiten Druckraum 19 der Kolben-Zylinder-Einheit 24 und der Druckmittelsenke 25 unterbrochen wird. Während der Ruhephase der Reibungskupplung 2 wird durch ein Überströmventil 27 in der hydraulischen Rückflussleitung 26 ein bestimmter Druck im zweiten Druckraum 19 der Kolben-Zylinder-Einheit 24 gehalten, der eine Ruhekraft erzeugt, welche einer Ruhekraft einer Vorlastfeder entspricht. Somit wird sichergestellt, dass das Ausrücklager 11 an den Anpressfedern 10 der Kupplung 2 anliegt, wodurch auf eine Vorlastfeder verzichtet werden kann. Tritt zwischen der Anpressplatte 7 und den Reibbelägen 5, 6 ein Verschleiß auf, so bewegt sich die Anpressplatte in Richtung Schwungrad 3 und die Lage der Anpressfeder 10 ändert sich. Hierdurch entsteht eine Kraft auf das Ausrücklager 11 über welches eine Axialkraft auf die Kolben-Zylinder-Einheit 24 wirkt. Durch diese Axialkraft werden die Kolben 14, 17 in der Zeichenblattebene nach rechts verschoben, bis die verschleißbedingte Lageänderung der Anpressfeder 10 der Reibungskupplung 2 kompensiert ist. Sobald sich ein neues Kräftegleichgewicht eingestellt hat, kommen die Kolben 14, 17 zum Stillstand. Die Endlageposition des Ausrücksystems 1, welche durch den zweiten Kolben 17 der Kolben-Zylinder-Einheit 24 realisiert wird, verschiebt sich dadurch ebenfalls in der Zeichenblattebene nach rechts, wodurch es zu einer axialen Verschiebung des Kolbenhubs bei einer Kupplungsausrückung kommt. Ausgehend von dieser neuen Position der Kolben 14, 17 führt der erste Kolben 14 der Kolben-Zylinder-Einheit 24 seine Ein- und Ausfahrbewegung mit dem gewohnten Kolbenhub aus, da der erste Druckraum 16 der Kolben-Zylinder-Einheit 24 über die Druckerzeugungsvorrichtung 28 mit einem konstanten Druck beaufschlagt werden kann. Bei weitergehendem Betrieb des Ausrücksystems 1 werden die Kolben 14, 17 durch einen immer größer werdenden Verschleiß an der Reibungskupplung 2 zunehmend mehr in der Zeichenblattebene nach rechts verlagert. Bei einem maximalen Kupplungsverschleiß erreicht der zweite Kolben 17 der Kolben-Zylinder-Einheit 24 eine Endstellung am getriebeseitigen Ende des Zylinders 13. Auch in dieser Stellung führt der erste Kolben 14 der Kolben-Zylinder-Einheit 24 den gewohnten Kolbenhub aus.

Durch das erfindungsgemäße Ausrücksystem 1 bleibt das Betätigungsvolumen für den Kupplungsausrückweg während der gesamten Lebensdauer konstant. Dadurch, dass die Kolben-Zylinder-Einheit 24 zwei Kolben 14, 17 aufweist, kann ein Verschleiß der Reibungskupplung 2 automatisch ausgeglichen und eine Kupplungsbetätigung mit einem konstanten Kolbenhub ausgeführt werden. Somit weist die Reibungskupplung 2 bzw. das Ausrücksystem 1 bei jeder Betätigung ein gleiches Ansprechverhalten auf, wodurch gleich kurze Schaltzeiten realisiert und beibehalten werden können.

### Bezugszeichen

- 1: Ausrücksystem
- 2: Reibungskupplung
- 3: Schwungmasse
- 4: Kupplungsscheibe
- 5: Reibbelag
- 6: Reibbelag
- 7: Anpressplatte
- 8: Kupplungsgehäuse
- 9: Distanzbolzen
- 10: Anpressfeder, Membran- oder Tellerfeder
- 11: Ausrücklager
- 12: Getriebeeingangswelle
- 13: Zylinder
- 14: erster Kolben der Kolben-Zylinder-Einheit, Arbeitskolben
- 15: Dichtmittel
- 16: erster Druckraum der Kolben-Zylinder-Einheit
- 17: zweiter Kolben der Kolben-Zylinder-Einheit
- 18: Dichtmittel
- 19: zweiter Druckraum der Kolben-Zylinder-Einheit
- 20: Rückschlagventil
- 21: Druckregulierungsmittel, Drossel
- 22: Druckmittelleitung
- 23: Druckerzeugungsvorrichtung
- 24: Kolben-Zylinder-Einheit
- 25: Druckmittelsenke
- 26: Rückflussleitung
- 27: Überströmventil
- 28: Druckerzeugungsvorrichtung
- 29: Druckmittelleitung
- 30: Druckmittelleitung
- 31: Schaltventil

## Patentansprüche

1. Ausrücksystem (1) für eine Schalt- und/oder Anfahrkupplung (2) in einem Kraftfahrzeug, bestehend aus einer konzentrisch zu einer Getriebeeingangswelle (12) angeordneten Kolben-Zylinder-Einheit (24), welche einen Zylinder (13) aufweist, wobei das Ausrücksystem (1) einen Verschleiß an der Schalt- und/oder Anfahrkupplung (2) automatisch ausgleicht, **dadurch gekennzeichnet, dass** die Kolben-Zylinder-Einheit (24) zwei Kolben (14, 17) aufweist, durch welche zwei Druckräume (16, 19) im Zylinder (13) der Kolben-Zylinder-Einheit (24) begrenzt werden, welche separat mit einem Druckmedium beaufschlagbar sind, und dass über den ersten Kolben (14) der Kolben-Zylinder-Einheit (24) die Schalt- und/oder Anfahrkupplung (2) betätigbar ist und der zweite Kolben (17) der Kolben-Zylinder-Einheit (24) bei maximalem Kupplungsverschleiß eine Endstellung am getriebeseitigen Ende des Zylinders (13) darstellt.

2. Ausrücksystem (1) nach Anspruch 1, **dadurch gekennzeichnet, dass** der erste Druckraum (16) der Kolben-Zylinder-Einheit (24) über eine Druckerzeugungsvorrichtung (28) pneumatisch ansteuerbar ist.

3. Ausrücksystem (1) nach Anspruch 1, **dadurch gekennzeichnet, dass** der zweite Druckraum (19) der Kolben-Zylinder-Einheit (24) über eine Druckerzeugungsvorrichtung (23) hydraulisch ansteuerbar ist.

4. Ausrücksystem (1) nach einem der Ansprüche 1 bis 3, **dadurch gekennzeichnet, dass** zwischen dem Zylinder (13) und den Kolben (14, 17) jeweils wenigstens ein Dichtmittel (15, 18) angeordnet ist.

5. Ausrücksystem (1) nach einem der vorangegangenen Ansprüche,
**dadurch gekennzeichnet, dass** der zweite Druckraum (19) der Kolben-Zylinder-Einheit (24) über eine Druckmittelleitung (22) an die Druckerzeugungsvorrichtung (23) und über eine Rückflussleitung (26) an eine Druckmittelsenke (25) angeschlossen ist.

6. Ausrücksystem (1) nach Anspruch 5, **dadurch gekennzeichnet, dass** die Druckerzeugungsvorrichtung (23) und die Druckmittelsenke (25) des Ausrücksystems (1) vorzugsweise aus den in einem Getriebe bereits vorhandenen Einrichtungen zur Schmiermittelversorgung des Getriebes ausgebildet sind.

7. Ausrücksystem (1) nach Anspruch 5 oder 6, **dadurch gekennzeichnet, dass** in der Druckmittelleitung (22) ein Rückschlagventil (20), ein Druckregulierungsmittel (21) und die Crucketzeugungsvorrichtung (23) angeordnet sind.

8. Ausrücksystem (1) nach Anspruch 5, **dadurch gekennzeichnet, dass** in der Rückflussleitung (26) ein Überströmventil (27) sowie ein Schaltventil (31) angeordnet sind.

9. Ausrücksystem (1) nach einem der vorangegangenen Ansprüche,
**dadurch gekennzeichnet, dass** eine Druckerzeugungsvorrichtung (28) ober eine Druckmittelleitung (29) mit dem ersten Druckraum (16) der Kolben-Zylinder-Einheit (24) und über eine Druckmittelleitung (30) mit dem Schaltventil (31) in Verbindung steht.

10. Ausrücksystem (1) nach einem der vorangegangenen Ansprüche,
**dadurch gekennzeichnet, dass** die Schalt- und/oder Anfahrkupplung (2) als Reibungskupplung ausgebildet ist.

11. Verfahren zur Ansteuerung eines Ausrücksystems (1) für eine Schalt- und/oder Anfahrkupplung (2) in einem Kraftfahrzeug, bestehend aus einer konzentrisch zu einer Getriebeeingangswelle (12) angeordneten Kolben-Zylinder-Einheit (24), wobei das Ausrücksystem (1) einen Kupplungsverschleiß automatisch ausgleicht, **dadurch gekennzeichnet, dass** zwei Kolben (14, 17) der Kolben-Zylinder-Einheit (24) zwei Druckräume (16, 19) begrenzen, welche separat mit einem Druckmedium angesteuert werden, dass über den ersten Kolben (14) der Kolben-Zylinder-Einheit (24) die Schalt- und/oder Anfahrkupplung betätigt und über den zweiten Kolben (17) der Kolben-Zylinder-Einheit (24) eine Endlage des Ausrücksystems (1) erzeugt wird, dass der zweite Druckraum (1g) der Kolben-Zylinder-Einheit (24) während einer Kupplungsbetätigung durch ein Rückschlagventil (20) in einer Druckmittelleitung (22) und durch ein Schaltventil (31) in einer Rückflussleitung (26) verschlossen wird, sobald der erste Druckraum (16) der Kolben-Zylinder-Einheit (24) mit einem entsprechenden Betätigungsdruck beaufschlagt wird, und dass der zweite Kolben (17) der Kolben-Zylinder-Einheit (24) bei maximalem Kupplungsverschleiß eine Endstellung am getriebeseitigen Ende des Zylinders (13) erreicht.

12. Verfahren nach Anspruch 11, **dadurch gekennzeichnet, dass** der erste Druckraum (18) der Kolben-Zylinder-Einheit (24) über eine Drukkerzeugungsvorrichtung (28) pneumatisch angesteuert wird.

13. Verfahren nach Anspruch 11, **dadurch gekennzeichnet, dass** der zweite Druckraum (19) der Kolben-Zylinder-Einheit (24) über eine Druckerzeugungsuorrichtung (23) hydraulisch angesteuert wird.

14. Verfahren nach einem der vorangegangenen Ansprüche, **dadurch gekennzeichnet, dass** während der Ruhephase der Kupplung durch ein Überströmventil (27) in der Rückflussleitung (26) im zweiten Druckraum (19) der Kolben-Zylinder-Einheit (24) ein vorbestimmter Druck gehalten wird.

15. Verfahren nach einem der vorangegangenen Ansprüche, **dadurch gekennzeichnet, dass** das Betätigungsvolumen für den Kolbenhub des ersten Kolbens (14) der Kolben-Zylinder-Einheit (24) während der gesamten Lebensdauer der Schalt- und/oder Anfahrkupplung (2) konstant bleibt.

## Claims

1. Release system (1) for a shift and/or starting clutch (2) in a motor vehicle, comprising a piston-cylinder unit (24) which is arranged concentrically with respect to a gearbox input shaft (12) and which has a cylinder (13), with the release system (1) automatically compensating wear in the shift and/or starting clutch (2), **characterized in that** the piston-cylinder unit (24) has two pistons (14, 17) which delimit two pressure chambers (16, 19) in the cylinder (13) of the piston-cylinder unit (24), which pressure chambers (16, 19) can be acted on separately with a pressure medium, and **in that** the shift and/or starting clutch (2) can be actuated by means of the first piston (14) of the piston-cylinder unit (24) and the second piston (17) of the piston-cylinder unit (24) constitutes an end position at the gearbox-side end of the cylinder (13) in the event of maximum clutch wear.

2. Release system (1) according to Claim 1, **characterized in that** the first pressure chamber (16) of the piston-cylinder unit (24) can be pneumatically actuated by means of a pressure generating device (28).

3. Release system (1) according to Claim 1, **characterized in that** the second pressure chamber (19) of the piston-cylinder unit (24) can be hydraulically actuated by means of a pressure generating device (23).

4. Release system (1) according to one of Claims 1 to 3, **characterized in that** in each case at least one sealing means (15, 18) is arranged between the cylinder (13) and the pistons (14, 17).

5. Release system (1) according to one of the preceding claims, **characterized in that** the second pressure chamber (19) of the piston-cylinder unit (24) is connected via a pressure medium line (22) to the pressure generating device (23) and via a return flow line (26) to a pressure medium sink (25).

6. Release system (1) according to Claim 5, **characterized in that** the pressure generating device (23) and the pressure medium sink (25) of the release system (1) are formed preferably by the devices for the lubricant supply of the gearbox which are already present in a gearbox.

7. Release system (1) according to Claim 5 or 6, **characterized in that** a check valve (20), a pressure regulating means (21) and the pressure generating device (23) are arranged in the pressure medium line (22).

8. Release system (1) according to Claim 5, **characterized in that** an overflow valve (27) and a switching valve (31) are arranged in the return flow line (26).

9. Release system (1) according to one of the preceding claims, **characterized in that** a pressure generating device (28) is connected via a pressure medium line (29) to the first pressure chamber (16) of the piston-cylinder unit (24) and via a pressure medium line (30) to the switching valve (31).

10. Release system (1) according to one of the preceding claims, **characterized in that** the shift and/or starting clutch (2) is designed as a friction clutch.

11. Method for actuating a release system (1) for a shift and/or starting clutch (2) in a motor vehicle, comprising a piston-cylinder unit (24) which is arranged concentrically with respect to a gearbox input shaft (12), with the release system (1) automatically compensating clutch wear, **characterized in that** two pistons (14, 17) of the piston-cylinder unit (24) delimit two pressure chambers (16, 19) which are actuated separately with a pressure medium, **in that** the shift and/or starting clutch is actuated by means of the first piston (14) of the piston-cylinder unit (24) and an end position of the release system (1) is generated by the second piston (17) of the piston-cylinder unit (24), **in that**, during a clutch actuation, the second pressure chamber (19) of the piston-cylinder unit (24) is closed by means of a check valve (20) in a pressure medium line (22) and by means of a switching valve (31) in a return flow line (26) when the first pressure chamber (16) of the piston-cylinder unit (24) is acted on with a corresponding actuation pressure, and **in that** the second piston (17) of the piston-cylinder unit (24) reaches an end position at the gearbox-side end of the cylinder (13) in the event of maximum clutch wear.

12. Method according to Claim 11, **characterized in that** the first pressure chamber (16) of the piston-cylinder unit (24) is pneumatically actuated by means of a pressure generating device (28).

13. Method according to Claim 11, **characterized in that** the second pressure chamber (19) of the piston-cylinder unit (24) is hydraulically actuated by means of a pressure generating device (23).

14. Method according to one of the preceding claims, **characterized in that,** during the rest phase of the clutch, a predetermined pressure is held in the second pressure chamber (19) of the piston-cylinder unit (24) by means of an overflow valve (27) in the return flow line (26).

15. Method according to one of the preceding claims, **characterized in that** the actuating volume for the piston stroke of the first piston (14) of the piston-cylinder unit (24) remains constant over the entire service life of the shift and/or starting clutch (2).

## Revendications

1. Système de débrayage (1) pour un embrayage de commutation et/ou de démarrage (2) dans un véhicule automobile, constitué d'une unité cylindre-piston (24) disposée concentriquement à un arbre d'entrée de boîte de vitesses (12), laquelle présente un cylindre (13), le système de débrayage (1) compensant automatiquement une usure au niveau de l'embrayage de commutation et/ou de démarrage (2), **caractérisé en ce que** l'unité cylindre-piston (24) présente deux pistons (14, 17), qui limitent deux espaces de pression (16, 19) dans le cylindre (13) de l'unité cylindre-piston (24), lesquels peuvent être sollicités séparément avec un fluide sous pression, et **en ce que** l'embrayage de commutation et/ou de démarrage (2) peut être commandé par le biais du premier piston (14) de l'unité cylindre-piston (24) et le deuxième piston (17) de l'unité cylindre-piston (24), dans le cas d'une usure maximale de l'embrayage, constitue une position de fin de course à l'extrémité du cylindre (13) du côté de la boîte de vitesses.

2. Système de débrayage (1) selon la revendication 1, **caractérisé en ce que** le premier espace de pression (16) de l'unité cylindre-piston (24) peut être commandé pneumatiquement par le biais d'un dispositif de génération de pression (28).

3. Système de débrayage (1) selon la revendication 1, **caractérisé en ce que** le deuxième espace de pression (19) de l'unité cylindre-piston (24) peut être commandé hydrauliquement par le biais d'un dispositif de génération de pression (23).

4. Système de débrayage (1) selon l'une quelconque des revendications 1 à 3, **caractérisé en ce qu'**à chaque fois au moins un moyen d'étanchéité (15, 18) est disposé entre le cylindre (13) et le piston (14, 17).

5. Système de débrayage (1) selon l'une quelconque des revendications précédentes, **caractérisé en ce que** le deuxième espace de pression (19) de l'unité cylindre-piston (24) est raccordé par le biais d'une conduite de fluide sous pression (22) au dispositif de génération de pression (23) et par le biais d'une conduite de reflux (26) à un carter de fluide sous pression (25).

6. Système de débrayage (1) selon la revendication 5, **caractérisé en ce que** le dispositif de génération de pression (23) et le carter de fluide sous pression (25) du système de débrayage (1) sont réalisés de préférence à partir des dispositifs déjà existants dans une boîte de vitesses, pour l'alimentation en lubrifiant de la boîte de vitesses.

7. Système de débrayage (1) selon la revendication 5 ou 6, **caractérisé en ce que** dans la conduite de fluide sous pression (22) sont disposés une soupape de non-retour (20), un moyen de régulation de la pression (21) et le dispositif de génération de pression (23).

8. Système de débrayage (1) selon la revendication 5, **caractérisé en ce qu'**une soupape de trop plein (27) ainsi qu'une soupape de commutation (31) sont disposées dans la conduite de reflux (26).

9. Système de débrayage (1) selon l'une quelconque des revendications précédentes, **caractérisé en ce qu'**un
dispositif de génération de pression (28) est en liaison avec le premier espace de pression (16) de l'unité cylindre-piston (24) par le biais d'une conduite de fluide sous pression (29) et avec la soupape de commutation (31) par le biais d'une conduite de fluide sous pression (30).

10. Système de débrayage (1) selon l'une quelconque des revendications précédentes, **caractérisé en ce que** l'embrayage de changement de vitesse et/ou de démarrage (2) est réalisé sous forme d'embrayage à friction.

11. Procédé de commande d'un système de débrayage (1) pour un embrayage de changement de vitesse et/ou de démarrage (2) dans un véhicule automobile, constitué d'une unité cylindre-piston (24) disposée concentriquement à un arbre d'entrée de boîte de vitesses (12), le système de débrayage (1) compensant automatiquement une usure de l'embrayage, **caractérisé en ce que** deux pistons (14, 17) de l'unité cylindre-piston (24) limitent deux espaces de pression (16, 19), lesquels sont commandés séparément avec un fluide sous pression, **en ce que** l'embrayage de changement de vitesse et/ou de démarrage est actionné par le biais du premier piston (14) de l'unité cylindre-piston (24) et **en ce qu'**une position de fin de course du système de débrayage (1) est produite par le biais du deuxième piston (17) de l'unité cylindre-piston (24), **en ce que** le deuxième espace de pression (19) de l'unité cylindre-piston (24) est fermé pendant un actionnement d'embrayage par une soupape de non-retour (20) dans une conduite de fluide sous pression (22) et par une soupape de commutation (31) dans une conduite de reflux (26), dès que le premier espace de pression (16) de l'unité cylindre-piston (24) est sollicité par une pression d'actionnement correspondante, et **en ce que** le deuxième piston (17) de l'unité cylindre-piston (24) atteint une position de fin de course à l'extrémité du cylindre (13) du côté de la boîte de vitesses dans le cas d'une usure maximale de l'embrayage.

12. Procédé selon la revendication 11, **caractérisé en ce que** le premier espace de pression (16) de l'unité cylindre-piston (24) est commandé pneumatiquement par le biais d'un dispositif de génération de pression (28).

13. Procédé selon la revendication 11, **caractérisé en ce que** le deuxième espace de pression (19) de l'unité cylindre-piston (24) est commandé hydrauliquement par le biais d'un dispositif de génération de pression (23).

14. Procédé selon l'une quelconque des revendications précédentes, **caractérisé en ce que** pendant la phase de repos de l'embrayage, une pression prédéterminée est maintenue par une soupape de trop plein (27) dans la conduite de reflux (26) dans le deuxième espace de pression (19) de l'unité cylindre-piston (24).

15. Procédé selon l'une quelconque des revendications précédentes, **caractérisé en ce que** le volume d'actionnement pour la course du piston du premier piston (14) de l'unité cylindre-piston (24) reste constant pendant toute la durée de vie de l'embrayage de changement de vitesse et/ou de démarrage (2).
